Europäisches Patentamt

European Patent Office

Office européen des brevets

(11) Numéro de publication: **0 422 499 A1**

# DEMANDE DE BREVET EUROPEEN

(21) Numéro de dépôt: **90118988.6**

(22) Date de dépôt: **04.10.90**

(51) Int. Cl.⁵: **B67D 3/00, G01F 11/28**

(30) Priorité: **12.10.89 FR 8913361**

(43) Date de publication de la demande:
**17.04.91 Bulletin 91/16**

(84) Etats contractants désignés:
**BE CH DE ES GB IT LI NL SE**

(71) Demandeur: **MOULINEX**
**11, rue Jules-Ferry**
**F-93170 Bagnolet(FR)**

(72) Inventeur: **Letournel, Gilles Jean-Marie,**

Moulinex
2, rue de L'Industrie, Cormelles Le Royal
F-14123 Ifs(FR)
Inventeur: **Parise, Vital André, Moulinex**
2, rue de L'Industrie, Cormelles Le Royal
F-14123 Ifs(FR)

(74) Mandataire: **May, Hans Ulrich, Dr.**
**Patentanwalt Dr. H.U. May Thierschstrasse**
**27**
**W-8000 München 22(DE)**

(54) Machine de distribution semi-automatique de boissons.

(57) L'invention concerne une machine de distribution de boisson comportant un réservoir (1) et un dispositif de dosage du liquide.

Le dispositif de dosage comporte un flotteur (4), une vis sans fin (5), des moyens de coopération débrayables entre le flotteur et la vis (5) de manière que le flotteur puisse occuper soit une position de repos pour laquelle il flotte à la surface du liquide, soit une position active pour laquelle, il est entraîné par la vis et est immergé à une certaine hauteur h , ainsi qu'un tuyau (7) dont l'orifice supérieur (8) est agencé sur le flotteur de manière à déboucher au dessus de la surface quand le flotteur occupe sa position de repos, et dont l'orifice inférieur (9) débouche à l'extérieur (3) du réservoir (1).

L'invention s'applique notamment aux machines à café.

## FIG.2

## MACHINE DE DISTRIBUTION SEMI-AUTOMATIQUE DE BOISSON

L'invention se rapporte aux machines de distribution semi-automatiques de boisson comportant un réservoir de liquide avec une ouverture pour le remplissage et une sortie pour la vidange, et un dispositif de dosage du liquide actionné par un circuit de commande.

Dans les distributeurs semi-automatiques de boisson fraîche ou chaude connus, par exemple machines à café, l'utilisateur sélectionne soit directement le volume, soit le nombre de tasses qu'il désire. La sélection de ce volume est transmise au circuit de commande qui actionne le dispositif de dosage, souvent constitué par une jauge associée à un système de vannes électromécaniques plus ou moins complexe. Pour mesurer le volume de liquide à distribuer, la jauge mesure la quantité de liquide présente dans le réservoir, les vannes étant ouvertes jusqu'à ce que le volume écoulé corresponde au volume désiré. L'inconvénient de ce système réside dans le fait que le coût d'un tel dispositif est très élevé et qu'il n'est pas toujours fiable.

La présente invention a pour but de remédier à cet inconvénient et de réaliser un dispositif de dosage particulièrement simple, fiable quelle que soit la quantité de liquide restant dans le réservoir et d'un coût modeste.

Selon l'invention, le dispositif de dosage est agencé à l'intérieur du réservoir et comporte un flotteur, une vis sans fin sensiblement verticale pouvant être entraînée en rotation par un moteur subordonné au circuit de commande, des moyens de coopération débrayables entre le flotteur et la vis de manière que le flotteur puisse occuper deux positions, soit une position de repos pour laquelle, les moyens de coopération étant débrayés, le flotteur flotte à la surface du liquide, soit une position active pour laquelle, les moyens de coopération étant embrayés, le flotteur, entraîné par la vis, est immergé à une hauteur déterminée par le circuit de commande, ainsi qu'un tuyau à deux orifices, l'orifice supérieur dit d'entrée agencé sur le flotteur de manière à déboucher légèrement au dessus de la surface du liquide quand le flotteur occupe sa position de repos, et l'orifice inférieur débouchant sur la sortie de vidange.

La présente invention a donc pour avantage de permettre, de façon rigoureuse et répétitive, de doser un volume de liquide correspondant au remplissage par exemple d'un nombre "n" de tasses, tant que la quantité de liquide restant dans le réservoir le permet. En effet, le flotteur en position de repos est toujours situé en surface du liquide présent dans le réservoir. Il suffit donc de faire descendre, au moyen de la vis, le flotteur à une certaine hauteur $h$ sous la surface pour déterminer le volume exact, le liquide s'écoulant simplement par gravité dans le tuyau jusqu'à ce que le flotteur se trouve de nouveau en surface et donc l'orifice dit d'entrée du tuyau de nouveau à l'air libre. Lors du remplissage, le flotteur remonte automatiquement en même temps que le niveau de liquide.

Les caractéristiques et avantages de l'invention ressortiront d'ailleurs de la description qui va suivre, à titre d'exemple, en référence aux dessins annexés dans lesquels :

la figure 1 est une vue en coupe verticale du dispositif de dosage selon l'invention illustrant le flotteur en position de repos;

la figure 2 est une vue analogue à la figure 1 illustrant le flotteur en position active;

la figure 3 est une vue en coupe verticale du dispositif de dosage selon un deuxième mode de réalisation de l'invention illustrant le flotteur en position de repos;

la figure 4 est une vue en coupe horizontale selon la ligne IV-IV de la figure 3;

la figure 5 est une vue analogue à la figure 3 illustrant le flotteur en position active;

la figure 6 est une vue en coupe verticale du dispositif de dosage selon un troisième mode de réalisation de l'invention illustrant le dispositif de dosage en position de repos;

la figure 7 est une vue analogue à la figure 6 illustrant le flotteur passant de sa position de repos à sa position active.

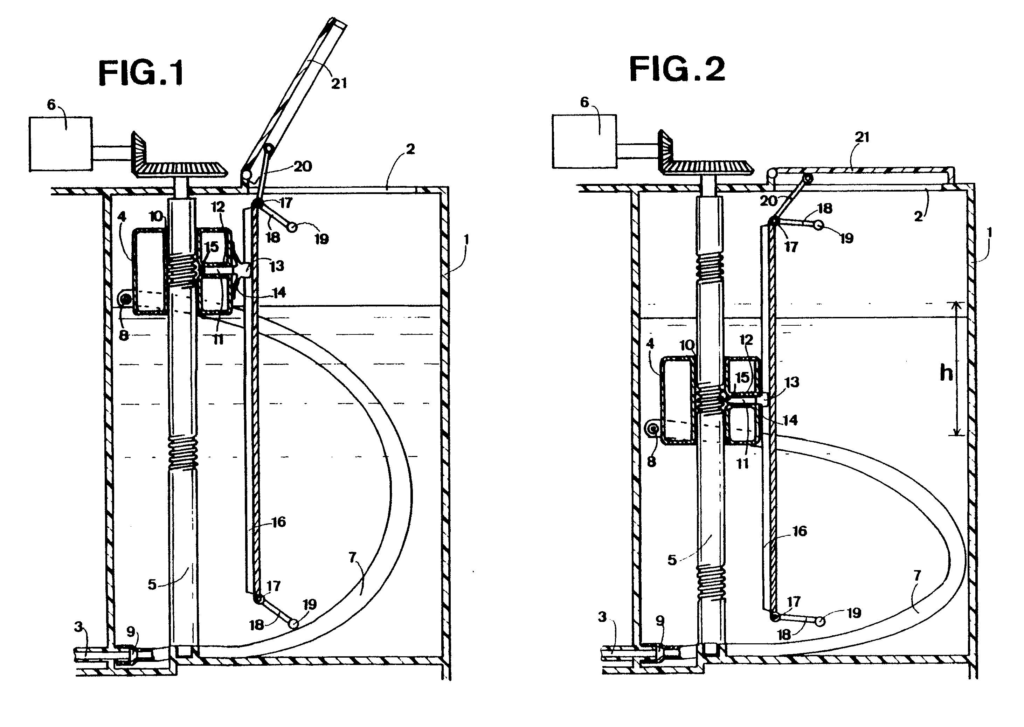

La machine de distribution semi-automatique de boisson représentée sur les figures 1 à 7 comporte un réservoir de liquide 1,101,201 avec une ouverture 2,102,202 pour le remplissage et une sortie 3,103,203 pour la vidange, et un dispositif de dosage du liquide actionné par un circuit de commande (non représenté).

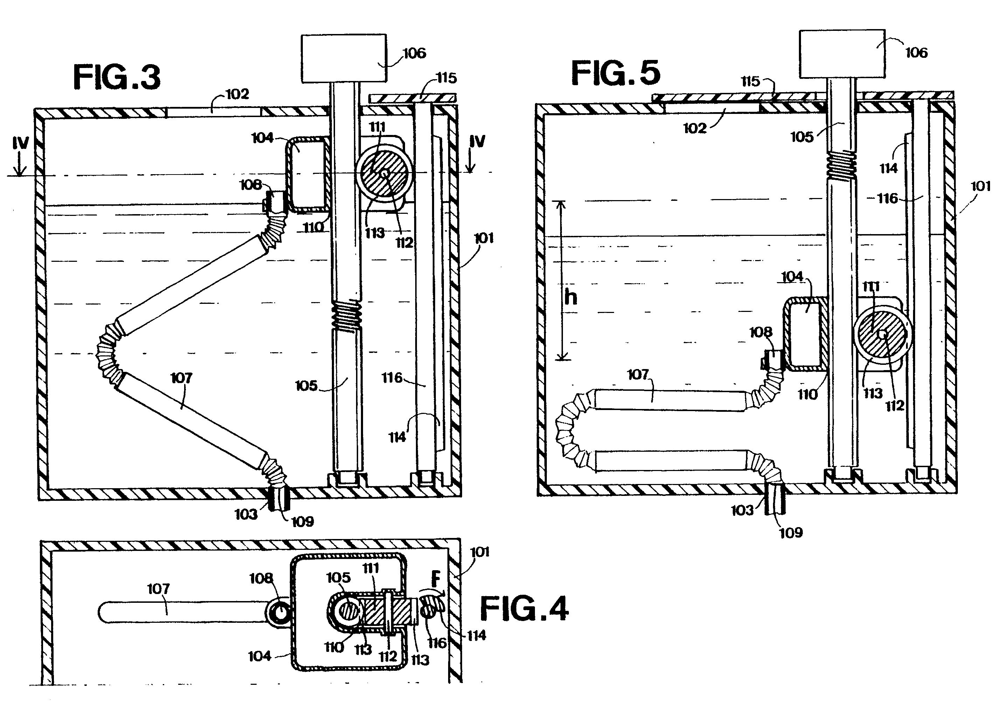

Selon une caractéristique particulièrement avantageuse de l'invention, le dispositif de dosage est agencé à l'intérieur du réservoir 1,101,201 et comporte un flotteur 4,104,204, une vis sans fin 5,105,205 sensiblement verticale pouvant être entraînée en rotation par un moteur schématisé en 6,106,206 subordonné au circuit de commande, des moyens de coopération débrayables entre le flotteur 4,104,204 et la vis 5,105,205 de manière que le flotteur 4,104,204 puisse occuper deux positions, soit une position de repos (figures 1,3,4,6) pour laquelle, les moyens de coopération étant débrayés, le flotteur 4,104,204 flotte à la surface du liquide, soit une position active (figures 2,5) pour laquelle, les moyens de coopération étant embrayés, le flotteur 4,104,204, entraîné par la vis 5,105,205, est immergé à une hauteur $h$ déterminée par le circuit de commande par rapport à la surface du liquide. Le dispositif de dosage comporte en outre un tuyau 7,107,207 à deux orifices, l'orifice supérieur dit d'entrée 8,108,208 étant agencé sur le flotteur 4,104,204 de manière à déboucher légèrement au dessus de la surface du liquide quand le flotteur 4,104,204 occupe sa position de repos (figures 1,3,4,6), et l'orifice inférieur 9,109,209 débouchant sur la sortie de vidange 3,103,203. Ainsi quand le flotteur occupe sa position active (figures 2 et 5), le liquide situé au dessus de l'orifice d'entrée 8,108,208 s'écoule par le tuyau 7,107,207 vers l'extérieur du réservoir.

Le tuyau peut être du type souple 7, "paille articulée" 107 ou en spirale 207.

La vis sans fin 5,105,205 traverse avantageusement une ouverture 10,110,210 pratiquée dans le flotteur 4,104,204 de manière que le flotteur 4,104,204 en position de repos (figures 1,3,4,6) coulisse librement le long de la vis 5,105,205, en particulier lors du remplissage du réservoir 1,101,201. Les moyens de coopération peuvent être obtenus par différents modes de réalisation.

Selon un premier mode de réalisation représenté sur les figures 1 et 2, les moyens de coopération sont constitués par un ergot 11 rétractable qui traverse une cheminée horizontale 12 du flotteur 4 débouchant dans l'ouverture 10 de passage de la vis , et qui comporte, d'une part, une extrémité 13 formant tête portant les moyens élastiques 14 qui sont constitués par deux petites lames s'appuyant sur le flotteur 4, et, d'autre part, une extrémité 15 formant doigt tel que l'ergot 11 puisse occuper deux positions, soit une position de coopération (figure 2) pour laquelle le doigt 15 de l'ergot 11 est engagé dans le filet de la vis sans fin 5 à l'encontre des moyens élastiques 14 et au moyen d'un dispositif d'actionnement, soit une position escamotée (figure 1), pour laquelle le dispositif d'actionnement autorise le désengagement du doigt 15 avec la vis 5, sous l'effet des moyens élastiques 14.

Le dispositif d'actionnement est constitué par une piste 16 montée articulée sur le réservoir 1 en chacune de ses extrémités 17 avec une bielle 18 montée également articulée en 19 sur la paroi interne du réservoir 1, de manière à occuper deux positions, soit une position d'appui (figure 2) pour laquelle la piste 16 est parallèle à la vis 5 et maintient l'ergot 11 en position de coopération en appuyant sur la tête 13 de l'ergot, soit une position de retrait (figure 1) pour laquelle la piste 16 relache son appui sur l'ergot 11 qui peut ainsi occuper sa position escamotée, grâce aux moyens élastiques 14.

Le dispositif d'actionnement 16 est relié par l'intermédiaire d'une biellette 20 à un couvercle 21 monté pivotant sur le réservoir de manière que la fermeture (figure 2) et l'ouverture (figure 1) du couvercle 21 amènent le dispositif d'actionnement 16 respectivement dans ses positions d'appui et de retrait.

En fonctionnement, l'utilisateur soulève le couvercle 21 pour ouvrir le réservoir 1 (figure 1). Ceci a pour effet de soulever la piste 16 tout en l'éloignant de la tête 13 de l'ergot 11. Les moyens élastiques 14 écartent la tête 13 du flotteur 5 et le doigt 15 de l'ergot 11 se dégage du filet de la vis 5. L'utilisateur remplit le réservoir 1 de liquide. Le flotteur 4 coulisse le long de la vis 5 en même temps que le niveau du liquide monte.

L'utilisateur ferme le réservoir 1 ce qui amène la piste 16 en sa position d'appui, engageant ainsi le doigt 15 de l'ergot 11 dans le filet de la vis sans fin 5.

L'utilisateur ayant sélectionné un nombre "n" de tasses, le circuit de commande actionne le moteur 6 qui fait tourner la vis 5 pendant un temps correspondant, pendant lequel elle fait descendre le flotteur 4 par l'intermédiaire de l'ergot 11 d'une hauteur h (figure 2) correspondant au volume désiré. Le liquide situé au dessus de l'orifice d'entrée 8 s'écoule alors par gravité par le tuyau jusqu'à ce que le flotteur 4 se situe de nouveau à la surface et l'orifice d'entrée 8 à l'air libre, désamorçant ainsi l'écoulement du liquide.

L'utilisateur peut programmer ultérieurement un autre nombre de tasses dans la mesure où il reste suffisamment de liquide. Sinon il doit de nouveau remplir le réservoir 1. Ainsi, tant qu'il reste suffisamment de liquide on peut mesurer successivement plusieurs volumes de liquide de manière semi-automatique, sans que la pression de la colonne de liquide intervienne sur le débit en sortie 3 du réservoir 1. On obtient un débit régulier et une mesure rigoureuse du volume, empêchant tout débordement au niveau du récipient de réception du liquide (par exemple une tasse pour une cafetière).

Dans un deuxième mode de réalisation tel que représenté sur les figures 3, 4 et 5, les moyens de coopération sont constitués par une roue dentée rotative 111 dont l'axe 112 est solidaire du flotteur 104 et dont les dents 113 sont toujours engrenées avec le filet de la vis 105, et une crémaillère 114 pouvant occuper deux positions, soit une position de coopération (figure 5) parallèle à la vis 105, pour laquelle les dents 113 de la roue 111 s'engrènent avec la crémaillère 114 de manière qu la roue 111 entraînée par la vis 105 roule le long de la crémaillère 114 et que le flotteur 104 occupe sa position active, soit une position escamotée (figure 3 et 4) pour laquelle la crémaillère 114 est débrayée de la roue 111 de manière que le flotteur 104 puisse occuper sa position de repos.

Le réservoir 101 comportant un couvercle 115 monté pivotant autour d'un axe de rotation vertical 116, la crémaillère 114 est portée longitudinalement par ledit axe 116, de manière que la fermeture du couvercle 115 embraye (figure 5) la crémaillère 114 sur la roue 111 et que l'ouverture du couvercle 115 (figure 3) débraye la crémaillère 114 de la roue 111. Comme on le voit mieux sur la figure 4, la crémaillère 114, s'étend sur un secteur de l'axe 116.

En fonctionnement, pour ouvrir le réservoir 101, l'utilisateur fait pivoter le couvercle 115 (figure 3). Ce pivotement fait tourner l'axe 116 portant la crémaillère 114 selon la flèche F de la figure 4 et éloigne la crémaillère de la roue 111. Quand l'utilisateur remplit le réservoir 101, le flotteur 104 monte le long de la vis 105 en même temps que le niveau de liquide, la roue 111 roulant alors le long de la vis 105. L'utilisateur fait pivoter le couvercle 115 pour fermer le réservoir 101, ce qui fait tourner en même temps l'axe 116 et la crémaillère 114, les dents de la crémaillère 114 venant s'engrener avec celle 113 de la roue 111 (figure 5). Comme décrit précédemment, la vis 105 fait tourner la roue 111 qui roule en même temps le long de la crémaillère 114, faisant ainsi descendre le flotteur 104 jusqu'à la hauteur h voulue. Le liquide situé au-dessus de l'orifice de sortie 108 s'écoule alors par le tuyau 107 jusqu'à ce que le flotteur soit de nouveau en surface et l'orifice de sortie à l'air libre. L'utilisateur peut alors soit programmer un nouveau nombre de tasses, soit remplir le réservoir.

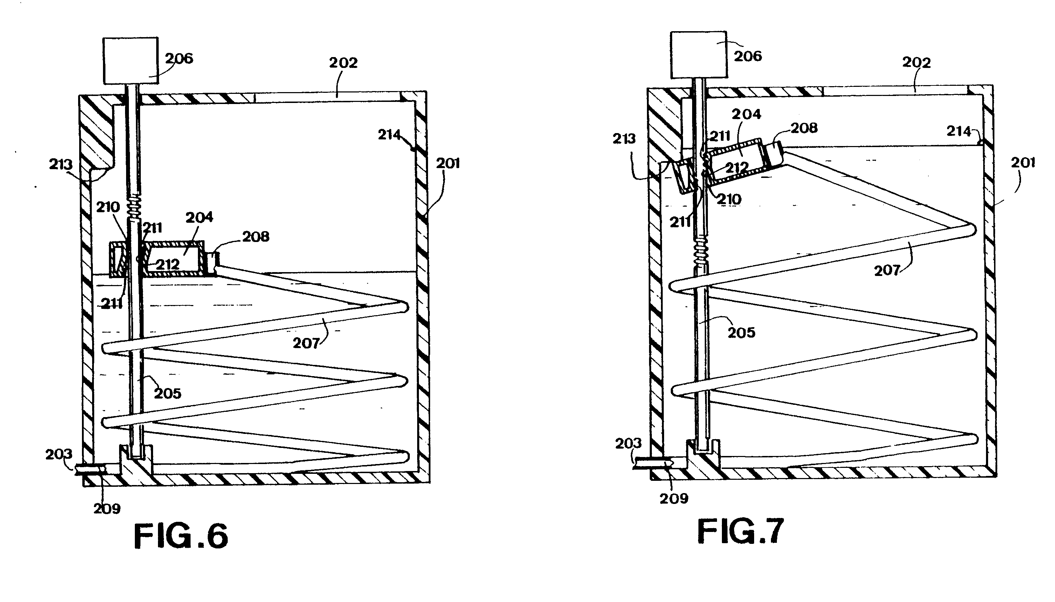

Selon un troisième mode de réalisation de l'invention, tel que représenté sur les figures 6 et 7, l'ouverture 210 du flotteur 204 est excentrée et les moyens de coopération entre le flotteur 204 et la vis 205 sont constitués par deux séries de dents 211 agencées sur la paroi interne 212 de l'ouverture 210 et disposées de part et d'autre de la vis 205 à des niveaux différents, ainsi que par une buté 213 agencée dans la partie haute du réservoir 201 de telle sorte que, au remplissage du réservoir 201 (figure 7), le flotteur 204 vienne en contact avec la buté 213 et s'incline de manière à engrener les deux séries de dents 211 avec le filet de la vis 205 de façon à occuper sa position active. Le flotteur 204 est avantageusement réalisé en plastique moulé.

Dans ce mode de réalisation, le remplissage peut se faire automatiquement après chaque cycle jusqu'à un niveau maximum 214 par des moyens connus en soi. Ainsi la machine est toujours prête à fournir le maximum de tasses.

En fonctionnement, le réservoir 201 se remplit (figure 6). Le flotteur 204 monte librement le long de la vis 205 avec le niveau de liquide. Le flotteur vient en contact avec la butée 213 et sous la poussée du liquide à son niveau maximum 214 (figure 7), se met en travers, ce qui a pour effet d'engrener ses dents 211 avec le filet de la vis 205. Comme décrit précédemment, le moteur 206 entraîne la vis 205 en rotation. Le flotteur 204, du fait de son excentricité, reste incliné en raison de la poussée d'Archimède et descend jusqu'à la hauteur h déterminée. Le volume situé au dessus de l'orifice d'entrée 208 s'écoule alors par le tuyau 207. Quand le flotteur 204 se retrouve à la surface du liquide, il reprend sa position horizontale, ce qui le débraye de la vis 205. Le réservoir 201 peut alors se remplir de nouveau.

## Revendications

1. Machine de distribution semi-automatique de boisson comportant un réservoir de liquide (1,101,201) avec une ouverture (2,102,202) pour le remplissage et une sortie (3,103,203) pour la vidange, et un dispositif de dosage du liquide actionné par un circuit de commande, **caractérisée en ce que** le dispositif de dosage est agencé à l'intérieur du réservoir (1,101,201) et comporte un flotteur (4,104,204), une vis sans fin (5,105,205) sensiblement verticale pouvant être entraînée en rotation par un moteur (6,106,206) subordonné au circuit de commande, des moyens de coopération débrayables entre le flotteur (4,104,204) et la vis (5,105,205) de manière que le flotteur (4,104,204) puisse occuper deux positions, soit une position de repos pour laquelle, les moyens de coopération étant débrayés, le flotteur (4,104,204) flotte à la surface du liquide, soit une position active pour laquelle, les moyens de coopération étant embrayés, le flotteur (4,104,204), entraîné par la vis (5,105,205), est immergé à une hauteur h déterminée par le circuit de commande, ainsi qu'un tuyau (7,107,207) à deux orifices, l'orifice supérieur dit d'entrée (8,108,208) étant agencé sur le flotteur (4,104,204) de manière à déboucher légèrement au dessus de la surface du liquide quand le flotteur (4,104,204) occupe sa position de repos, et l'orifice inférieur (9,109,209) débouchant sur la sortie de vidange (3,103,203).

2. Machine de distribution de boisson selon la revendication 1, **caracterisée en ce que** la vis sans fin (5,105,205) traverse une ouverture (00,110,210) pratiquée dans le flotteur (4,104,204) de manière que le flotteur (4,104,204) en position de repos coulisse librement le long de la vis (5,105,205).

3. Machine de distribution de boisson selon la revendication 1 ou 2, **caractérisée en ce que** les moyens de coopération sont constitués par un ergot (11) rétractable relié au flotteur (4) pouvant occuper deux positions, soit une position de coopération pour laquelle une extrémité (15) de l'ergot (11) formant doigt est engagé dans le filet de la vis sans fin (5) au moyen d'un dispositif d'actionnement, soit une position escamotée, pour laquelle le dispositif d'actionnement autorise le désengagement du doigt (15) de l'ergot (11) avec la vis (5).

4. Machine de distribution de boisson selon la revendication 3, **caractérisée en ce que** le dispositif d'actionnement est constitué par une piste (16) montée articulée sur le réservoir (1) en chacune de ses extrémités (17) avec une bielle (18) de manière à occuper deux positions, soit une position d'appui pour laquelle la piste (16) est parallèle à la vis (5) et maintient l'ergot (11) en position de coopération, soit une position de retrait pour laquelle la piste (16) relache son appui sur l'ergot (11) qui peut ainsi occuper sa position escamotée, grâce à des moyens élastiques (14).

5. Machine de distribution de boisson selon la revendication 3 ou 4, **caracterisée en ce que** l'ergot (11), traversant une cheminée (12) du flotteur (4), comporte une tête (13) destinée à venir en appui, avec le dispositif d'actionnement (16) en position d'appui, et portant les moyens élastiques (14) qui sont constitués par deux petites lames s'appuyant sur le flotteur (4).

6. Machine de distribution de boisson selon la revendication 4 ou 5, **caracterisée en ce que** le dispositif d'actionnement (16) est relié par l'intermédiaire d'une biellette (20) à un couvercle (21) monté pivotant sur le réservoir (1) de manière que la fermeture et l'ouverture du couvercle (21) amènent le dispositif d'actionnement (16) respectivement dans ses positions d'appui et de retrait.

7. Machine de distribution de boisson selon la revendication 1 ou 2, **caracterisée en ce que** les moyens de coopération sont constitués par une roue dentée rotative (111) dont l'axe (112) est solidaire du flotteur (104) et dont les dents (113) sont toujours engrenées avec le filet de la vis (105), et une crémaillère (114) pouvant occuper deux positions, soit une position de coopération parallèle à la vis (105), pour laquelle les dents (113) de la roue (111) s'engrènent avec la crémaillère (114) de manière que la roue (111) entraînée par la vis (105) roule le long de la crémaillère (114) et que le flotteur (104) occupe sa position active, soit une position escamotée pour laquelle la crémaillère (114) est débrayée de la roue (111) de manière que le flotteur (104) puisse occuper sa position de repos.

8. Machine de distribution de boisson selon la revendication 7, **caractérisée en ce que**, le réservoir (101) comportant un couvercle (115) monté pivotant autour d'un axe de rotation vertical (116), la crémaillère (114) est portée par ledit axe (116), de manière que la fermeture du couvercle (115) embraye la crémaillère (114) sur la roue (111) et que l'ouverture du couvercle (115) débraye la crémaillère (114) de la roue (111).

9. Machine de distribution de boisson selon la revendication 2, **caracterisée en ce que**, l'ouverture (210) du flotteur (204) étant excentrée, les moyens de coopération entre le flotteur (204) et la vis (205) sont constitués par deux séries de dents (211) agencées sur la paroi interne (212) de l'ouverture (210) et disposées de part et d'autre de la vis (205) à des niveaux différents, ainsi que par une buté (213) agencée dans la partie haute du réservoir (201) de telle sorte que, au remplissage du réservoir (201), le flotteur (204) vienne en contact avec la buté (213) et s'incline de manière à engrener les deux séries de dents (211) avec le filet de la vis (205) de façon à occuper sa position active.

EP 0 422 499 A1

FIG.2

FIG.1

6

# FIG.3

# FIG.5

# FIG.4

EP 0 422 499 A1

FIG.6

FIG.7

EP 0 422 499 A1

Office européen
des brevets

**RAPPORT DE RECHERCHE
EUROPEENNE**

Numéro de la demande

**EP 90 11 8988**

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 540 663   (BRAUN AG)<br>* Figure 1; colonne 5, lignes 32-58 *<br>− − − | 1 | B 67<br>D 3/00<br>G 01 F 11/28 |
| A | NL-A-2 134 8   (BATAAFSCHE PETROLEUM)<br>* Figure 1; page 1, lignes 37-62 *<br>− − − | 1 | |
| A | EP-A-0 151 500   (JEDAHO B.V.)<br>− − − − − | | |

| DOMAINES TECHNIQUES RECHERCHES (Int. Cl.5) |
|---|
| B 67 D<br>G 01 F<br>A 47 J |

Le présent rapport de recherche a été établi pour toutes les revendications

| Lieu de la recherche | Date d'achèvement de la recherche | Examinateur |
|---|---|---|
| La Haye | 07 janvier 91 | DEUTSCH J.P.M. |

CATEGORIE DES DOCUMENTS CITES
X : particulièrement pertinent à lui seul
Y : particulièrement pertinent en combinaison avec un
    autre document de la même catégorie
A : arrière-plan technologique
O : divulgation non-écrite
P : document intercalaire
T : théorie ou principe à la base de l'invention

E : document de brevet antérieur, mais publié à la
    date de dépôt ou après cette date
D : cité dans la demande
L : cité pour d'autres raisons
 
& : membre de la même famille, document
    correspondant